# EUROPÄISCHE PATENTANMELDUNG

(11) **EP 1 217 559 A1**
(43) Veröffentlichungstag der Anmeldung: **26.06.2002**
(21) Anmeldenummer: 00128377.9
(22) Anmeldetag: 22.12.2000
(51) Int. Cl.: G06F 17/60

(54) **Vorrichtung und Verfahren zur Datenspeicherung und zum Datenaustausch zwischen Anbietern und potentiellen Kunden**

(71) Anmelder: UBS AG, 8001 Zürich (CH)
(72) Erfinder: Artmann, Barbara, 7800 Küsnacht (CH); Thompson, Simone, 8002 Zürich (CH); Schorn, Peter, 8006 Zürich (CH); Bisson, Alastair, 4052 Basel (CH); Müller, André, 8032 Zürich (CH)
(74) Vertreter: von Hellfeld, Axel, Dr. Dipl.-Phys.

(57) **Zusammenfassung**

Ein System zur Datenspeicherung und zum Datenaustausch zwischen mindestens einem Anbieter und potentiellen Kunden weist eine Computereinheit (10) auf, die insbesondere eine Website des Anbieters zum Abruf bereitstellt. Diese Informationen sind über eine Datennetzadresse, insbesondere eine Internetadresse abrufbar. Ein Nutzer des Datennetzes kann in ein Peripheriegerät Kundendaten eingeben, die der Computereinheit über das Datennetz zugeführt werden, wobei zu den Kundendaten in der Computereinheit eine für die Datennetzadresse spezifische Kennung automatisch hinzugeführt wird. Die Kundendaten mit der spezifischen Kennung werden einer Speichereinheit (34) zugeführt, wobei in der Speichereinheit auch Kundendaten abgelegt sind, so daß anhand der Kundendaten ermittelbar ist, wer ursprünglich nach Aufruf der Datennetzadresse zum potentiellen Kunden geworden ist und welche Kennung ihm zugeordnet ist.

Die Anmeldung betrifft auch eine Datenstruktur zur Verwendung in einem derartigen System und ein Verfahren zum Führen einer Kundendatei eines Anbieters.

## Beschreibung

Die Erfindung betrifft eine Vorrichtung (System) und ein Verfahren zur Datenspeicherung und zum Datenaustausch zwischen zumindest einem Anbieter und potentiellen Kunden. Insbesondere betrifft die Erfindung die Führung einer Kundendatei in einer derartigen Vorrichtung und einem solchen Verfahren. Die Vorrichtung und das Verfahren sind besonders geeignet zur Datenspeicherung und zum Datenaustausch zwischen zwei oder mehr Anbietern und zur Akquisition von Kunden eines Anbieters durch einen anderen Anbieter. Unter einem "Anbieter" ist hier zu verstehen ein Anbieter von Waren und/oder Dienstleistungen, insbesondere Finanzdienstleistungen.

Für die Akquisition von Kunden bedienen sich Waren und/oder Dienstleistungen anbietende Unternehmen mehr und mehr der Datennetze, insbesondere des Internets. Aufgrund der zunehmenden Verflechtung und Diversifizierung des Marktes machen die Unternehmen zunehmend gezielte Angebote für Zielgruppen, wobei die Zielgruppen nach Kriterien ausgewählt sind, die besondere Angebote rechtfertigen. Beispielsweise erhalten Mitglieder bestimmter Clubs eine Clubkarte, die sie, wenn sie dies wünschen, auch als Kreditkarte verwenden können. In solchen Fällen geht die die Kreditkarte führende Bank eine Partnerschaft mit dem Club ein weil sie davon ausgeht, daß die Clubmitglieder in der Regel eine gewisse Bonität haben und deshalb sich das Geschäft mit den Kreditkarten rentiert, so daß gegebenenfalls besondere Konditionen eingeräumt werden können.

Die nun zur Verfügung stehenden weitverzweigten und weithin zugänglichen Datennetze, insbesondere das Internet, ermöglichen auch in diesem Bereich eine zunehmende Verbesserung des Informationsaustausches zwischen Anbietern und potentiellen Kunden und damit einhergehend eine qualitative Verbesserung der Beziehungen, sowohl aus Sicht der Anbieter als auch aus Sicht der Kunden, insbesondere eine erhöhte Selektivität in dem-Sinne, daß sich sowohl die Anbieter mit erhöhter Informationsdichte ihre Kunden als auch die Kunden ihre Anbieter auswählen können und dabei aufgrund der zusätzlichen Informationen besondere Geschäftsbedingungen vereinbaren können.

Zu diesem Zweck lehrt die Erfindung ein System zur Datenspeicherung und zum Datenaustausch zwischen mindestens einem Anbieter und potentiellen Kunden mit
- einer Computereinheit, die Informationen, insbesondere eine Website, eines Anbieters zum Abruf bereitstellt, welche über eine Datennetzadresse, insbesondere eine Internetadresse, abrufbar sind, wobei die Computereinheit so ausgelegt und programmiert ist, daß ein Nutzer des Datennetzes, der die Informationen abruft, dann, wenn er interessiert ist, Kunde des Anbieters zu werden, Kundendaten in ein Peripheriegerät eingeben kann, die der Computereinheit über das Datennetz zugeführt werden, wobei zu den Kundendaten in der Computereinheit eine für die genannte Datennetzadresse spezifische Kennung automatisch hinzugefügt wird, und
- einer zentralen Speichereinheit, welcher die Computereinheit Kundendaten mit der spezifischen Kennung zuführt, die in der zentralen Speichereinheit abgelegt werden, wobei in der zentralen Speichereinheit auch Kundendaten anderer Kunden abgelegt sind, zu denen diese spezifische Kennung nicht oder eine andere Kennung hinzugefügt ist, so daß anhand der Kundendaten ermittelbar ist, wer ursprünglich nach Aufruf der Datenneztadresse zum potentiellen Kunden geworden ist und welche Kennung ihm gegebenenfalls zugeordnet ist.

Die Erfindung nutzt also ein Datennetz, beispielsweise das Internet, dazu aus, hierüber kontaktierende potentielle Kunden eines Anbieters gegenüber anderen Kunden, die beispielsweise über einen persönlichen Kontakt mit dem Anbieter oder durch schriftliche Kommunikation Kunden geworden sind, kenntlich zu machen. Hierdurch wird die Möglichkeit eröffnet, diese über das Internet gewonnenen Kunden besonders zu bevorzugen, d.h. z.B. ihnen Preisnachlässe zu gewähren, Zusatzgeschenke oder Prämien zukommen zu lassen, oder ihnen durch die genannte Datennetzadresse definierte besondere Informationen zu geben etc.. Beispielsweise können auf der Website des Anbieters spezielle Informationen über Angebote gemacht werden, die nur im Internet zugänglich sind, und nur derjenige, der über das Internet, also online, Kontakt aufnimmt und über das Netz seine relevanten Daten eingibt, erhält diese besonderen Informationen und/oder Angebote. Ein Vertrag zu diesen besonderen Konditionen wird dabei evtl. mit einer elektronischen Unterschrift abgeschlossen, oder er wird später per normaler Post bestätigt.

Gemäß einer bevorzugten Ausführungsform ist das System so ausgelegt, daß die Computereinheit Informationen bereitstellt, die über verschiedene Datennetzadressen abrufbar sind, und wobei spezifische Kennungen, die von einem Nutzer des Datennetzes eingegebenen Kundendaten hinzugefügt werden, bei unterschiedlichen Datennetzadressen, über die der Kunde die Informationen abgerufen hat, verschieden sind, und wobei alle Kundendaten in der zentralen Speichereinheit abgelegt werden, so daß dort anhand der Kundendaten erkennbar ist, wer ursprünglich nach Aufruf welcher Datennetzadresse zum potentiellen Kunden geworden ist.

In diesem Falle sind in der zentralen Speichereinheit also nicht unbedingt auch Daten von Kunden abgelegt, die außerhalb des Datennetzes bzw. des Internets gewonnen wurden, aber auf jeden Fall erfolgt eine technische Unterscheidung zwischen verschiedenen Arten von Kunden, die sich durch die Datennetzadresse unterscheiden, über die sie ursprünglich einmal, zumindest potentiell, Kunde geworden sind. Dies ist insbesondere dann sinnvoll, wenn verschiedenen Kundenkreisen verschiedene Datennetzadressen mitgeteilt werden, und wenn diesen verschiedenen Kundenkreisen unterschiedliche Konditionen gewährt werden sollen.

Besonders gut umsetzbar sind die oben genannten Ausführungsformen, wenn die Datennetzadresse eine Internetadresse ist, die über ein Link auf einer Homepage oder Website eines Partners des Anbieters, die außerhalb der Computereinheit verwaltet wird, abrufbar ist.

In diesem Falle muß die Datennetzadresse nicht besonderen Personenkreisen bekanntgemacht werden; bevorzugt ist der betreffende Link auf der Homepage oder Website des Partners der einzige Weg, überhaupt diese Adresse aufzurufen. Dann werden die Kundenkreise gewissermaßen "gefiltert". Auf dem Weg über die jeweilige Internetadresse kann man nur Kunde werden, wenn man zuvor die Homepage oder Website des Partners des Anbieters besucht hat, und dies tun, zumindest in der Regel, jeweils ganz bestimmte Personen. Dabei wird der Partner so ausgewählt, daß bestimmte Zielgruppen angesprochen werden können.

Eine besondere Selektivität bei der Kundenakquisition wird dann erreicht, wenn der vorstehend genannte Partner des Anbieters seine Website nur ausgewählten Personenkreisen oder Mitgliedern zugänglich macht bzw. wenn der Partner den Link auf seiner Website nur nach vorgegebenen Auswahlkriterien für bestimmte Personen zugänglich macht, z.B. mittels eines persönlichen Zugangscodes (PIN oder dgl.). Zum Beispiel und bevorzugt kann der "Anbieter" eine Bank und der vorstehend genannte "Partner" des Anbieters ebenfalls ein Anbieter von Waren und/oder Dienstleistungen sein, so daß mit dem erfindungsgemäßen System Kunden oder Mitglieder des einen Anbieters (vorstehend Partner genannt) Waren eines anderen Anbieters (also z.B. einer Bank) bestellen bzw. Dienstleistungen des anderen Anbieters (Bank) in Anspruch nehmen können. Dies ermöglicht in informationstechnisch einfacher Weise eine hohe Selektivität beim Datenaustausch zwischen Anbietern und potentiellen Kunden dieser Anbieter in dem Sinne, daß nach bestimmten Kriterien besser zueinander passende Anbieter und Kunden, z.B. unter dem Gesichtspunkt der Bonität, zueinander finden.

Die Informationen, die über die Internetadresse abrufbar sind, sind bevorzugt ebenfalls eine Website, insbesondere eine Homepage, und zwar eine Website des Anbieters, die aber in vorteilhafter Weise so gestaltet ist, daß derjenige, der diese Site über den Link aufruft, gezielt angesprochen wird, indem das selbe Grunddesign auf der Site des Anbieters wie auf der Site des Partners des Anbieters verwendet wird. Unter Grunddesign ist hier die Hintergrundfarbe der Site, die verwendete Schriftart und Schriftgröße, bestimmte graphische Elemente und anderes mehr zu verstehen.

Gemäß einer besonders bevorzugten Ausgestaltung der Erfindung ist die Website des Anbieters (der Begriff "Anbieter" ist hier im Sinne des vorletzten Absatzes zu verstehen, d.h. es gibt einen Anbieter (z.B. eine Bank) und Partner dieses Anbieters) derart strukturiert, daß sie eine sogenannte Coresite und der Coresite zugeordnete sogenannte Presites aufweist. Im Server des Anbieters (z.B. einer Bank) wird die Coresite bereitgestellt, wobei die Coresite bevorzugter Weise nicht direkt über eine URL-Adresse zugänglich ist. Vielmehr sind der Coresite mehrere Presites vorgelagert, die ein potentieller Kunde über eine URL-Adresse anwählen kann, z.B. durch direkte Eingabe der Adresse in einen Webbrowser. Bei dieser Ausgestaltung der Erfindung sind die genannten Presites bevorzugt jeweiligen Partnern des Anbieters zugeordnet. Ist der Anbieter z.B. eine Bank, die Finanzdienstleistungen anbietet, können die Partner in anderen Geschäftsfeldern tätig sein, z.B. eine Fluggesellschaft, ein anderes Unternehmen, oder ein Club etc. Die Presites sind dann den Partner-Unternehmen zugeordnet, insbesondere derart, daß sie mit Websites dieser Partner-Unternehmen gelinkt sind. Auf diese Weise läuft der Zugang zur Coresite des Anbieters über die Websites der verschiedenen Partner und die diesen Partnern zugeordneten Presites des Anbieters. Die Websites der Partner sind, versteht sich, jeweils in Servern dieser Partner angesiedelt.

Die vorstehend genannte Struktur beinhaltet eine besondere Art des Zugangs zur Coresite des Anbieters, nämlich (vorzugsweise nur) über eine Vielzahl von Presites der genannten Art, wobei diese Presites über unterschiedliche Websites anwählbar sind. Die Kommunikationsstruktur ähnelt somit einer "umgekehrten" Baumstruktur. Während im Internet herkömmlicherweise ein Portal Ausgangspunkt für den Zugang zu einer Vielzahl von Websites ist, wobei durch die Richtung der Links eine verästelte Baumstruktur gegeben ist, die sich immer mehr aufgliedert, ist bei der vorstehend erläuterten erfindungsgemäßen Struktur ein zentrales Portal (die Coresite) in umgekehrter Weise Zielpunkt aus einer verästelten Struktur von Presites und Websites heraus.

Die Erfindung beinhaltet auch eine bevorzugt verwendete Datenstruktur bezüglich der Kundendaten. Bevorzugt weist jeder einem (potentiellen) Kunden zugeordnete Datensatz drei unterschiedliche Komponenten auf, nämlich 1. Kundenstammdaten (z.B. eine Kundennummer), 2. eine Kontonummer, und 3. eine partnerspezifische Kennung. Die partnerspezifische Kennung gibt bevorzugt an, ob das jeweils zugeordnete Konto unmittelbar bei dem Anbieter eröffnet wurde oder aber mittelbar über einen Partner des Anbieters. Mit dieser Datenstruktur kann in einfacher Weise erfaßt werden, ob ein Kunde, für den ein einziger Kundenstammdatensatz eingelegt ist, über mehrere Konten verfügt. Zum Beispiel kann der Kunde über unterschiedliche Partner des Anbieters zum Kunden geworden sein. In diesem Falle kann er mehrere Konten bei dem Anbieter (z.B. der Bank) führen.

Das Hinzufügen einer "Kennung" zu dem Datensatz, also die Registrierung des Partners bzw. der Art des Partners, muß nicht notwendig im Rahmen der ersten elektronischen Kontaktaufnahme des potentiellen Kunden erfolgen. Es ist auch möglich, daß die Kennung erst unmittelbar vor oder auch bei Abschluß einer Kontoeröffnung vergeben wird.

Die Erfindung beinhaltet auch ein Verfahren zum Führen einer Kundendatei eines Anbieters, mit den Schritten:
- Bereitstellen zumindest einer Datennetzadresse, insbesondere einer Internetadresse, über die ein Nutzer des Datennetzes Informationen des Anbieters, insbesondere eine Website, abrufen kann,
- Bereitstellen der Möglichkeit, daß der Nutzer, der die Datennetzadresse aufgerufen hat, wenn er Kunde werden will, Kundendaten eingeben kann,
- automatisches Hinzufügen einer für die Datennetzadresse spezifischen Kennung zu den Kundendaten,
- Ablegen der Kundendaten mit der Kennung in einer zentralen Speichereinheit, in der auch Kundendaten ohne diese spezifische Kennung oder mit einer anderen Kennung abgelegt sind, so daß anhand der Kundendaten ermittelbar ist, wer ursprünglich nach Aufruf der Datennetzadresse zum potentiellen Kunden geworden ist.

Mit dem erfindungsgemäßen System läßt sich ein Verfahren zum Gewinnen von neuen Kunden für einen Anbieter verwirklichen, das die Schritte aufweist:
- Bereitstellen eines Hinweises auf besondere Konditionen des Anbieters, die nur für Kunden eines Partners des Anbieters gelten, auf einer Website des Partners,
- Bereitstellen eines Links auf der Website des Partners zu einer bestimmten Website des Anbieters,
- Bereitstellen der Möglichkeit für potentielle Kunden, nach Aufruf der bestimmten Website des Anbieters, sich als Kunde durch Eingabe von Kundendaten in eine Bedienungsoberfläche (also über das Internet) in einer Comptereinheit des Anbieters registrieren zu lassen,
- Erfassen des Umstandes (der Bedingung), daß die Kunden über die Website des Partners zu der bestimmten Website gelangt sind,
- zentrales Abspeichern der eingegebenen Kundendaten mit einem Hinweis auf diesen Umstand, und
- Gewähren der besonderen Konditionen für die so gewonnenen Kunden.

Auch bei dieser erfindungsgemäßen Variante können die Websites in der oben erläuterten Weise strukturiert sein, d.h. der Anbieter (z.B. die Bank) stellt in seinem Server die genannte Coresites und die Presites bereit, wobei letztere jeweils den verschiedenen Partnern des Anbieters zugeordnet sind. Auch hier sind die Begriffe "Anbieter" einerseits und "Partner" andererseits im oben erläuterten Sinn zu verstehen. Die Presites im Server des Anbieters können ästhetisch und auch inhaltlich auf den jeweiligen Partner abgestimmt sein.

In Abwandlung der oben beschriebenen Erfindung kann das Erfassen der Tatsache, daß die Kunden über die Website des Partners zu der bestimmten Coresite gelangt sind, auch erfolgen, indem nicht eine besondere Kennung verwendet wird, sondern indem die entsprechenden Kundendaten in einem vorgegebenen Speicherbereich abgelegt und dadurch identifizierbar werden. In diesem Fall ist der Speicherbereich die "Kennung".

Das Verfahren zum Gewinnen von neuen Kunden ist dann besonders selektiv, wenn eine Datennetzadresse, unter der die bestimmte Website des Anbieters aufrufbar ist, nicht öffentlich bekannt ist, und wenn auch keine Links auf die bestimmte Website von anderen Websites als der des Partners existieren, so daß gesichert ist, daß jeder, der die bestimmte Website aufruft, zuvor die Website oder Homepage des Partners aufgerufen hat. Dadurch wird sichergestellt, daß die besonderen Vertragsbedingungen nur den Kunden gewährt werden, die Veranlassung hatten, die Website des Partners aufzurufen.

Beispielsweise kann die Website des Partners eine Website sein, über die ein Kontostand abfragbar ist oder auf der über bestimmte Veranstaltungen eines Clubs regelmäßig berichtet wird, etc.. Eventuell kann man durch insbesondere elektronische (ggf. automatische) Nachfrage bei dem Partner sicherstellen, daß die neuen Kunden des Anbieters auch tatsächlich Kunden des Partners sind, wenn man ausschließen möchte, daß Personen, die nur zufällig auf die Website des Partners gelangt sind, die besonderen Vertragsbedingungen erhalten.

Es ist auch möglich, den Zugang zu der bestimmten Website dadurch nur ausgewählten Interessenten und Kunden oder Mitgliedern des Partners zugänglich zu machen, daß der Zugang zu der Link durch ein Paßwort oder dergleichen gesichert ist oder auch der Zugang zu der Website bzw. bestimmten Bereichen der Website des Partners auf diese Weise selektiv gestaltet wird.

Auch hier kann das Verfahren mit mehreren Partnern durchgeführt werden, auf deren Homepages Links für jeweils verschiedene bestimmte Websites des Anbieters bereitgestellt sind, und es wird erfaßt, über welche Website eines Partners die Kunden zu dem Anbieter gelangt sind. Für Kunden, die über Websites von unterschiedlichen Partnern zu dem Anbieter gelangt sind, können dann unterschiedliche Konditionen gelten.

Wie oben bereits erläutert ist, können die Partner im vorstehend beschriebenen Sinn auch andere Anbieter von Waren und/oder Dienstleistungen sein.

Nachfolgend werden Ausführungsbeispiele der Erfindung mit Blick auf die Figuren beispielhaft beschrieben. Es zeigt:

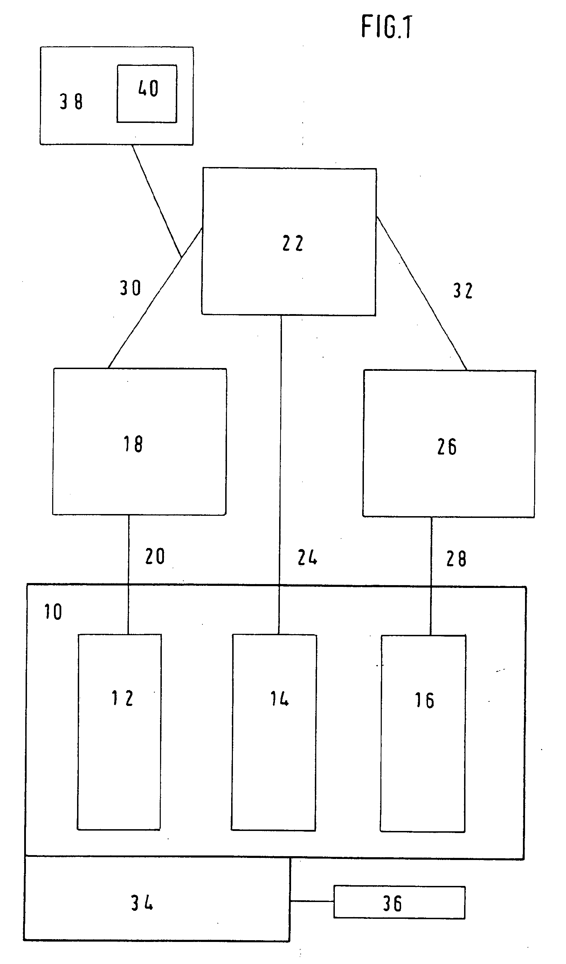

- Fig. 1: schematisch einen Grundaufbau eines Systems zur Datenspeicherung und zum Datenaustausch, mit dem die Erfindung gemäß einem ersten Ausführungsbeispiel verwirklicht werden kann;
- Fig. 2: ein zweites Ausführungsbeispiel eines erfindungsgemäßen Systems zur Datenspeicherung und zum Datenaustausch, bei dem der Server eines Anbieters in besonderer Weise gestaltete Websites bereitstellt; und
- Fig. 3: schematisch eine bevorzugte Datenstruktur für einzelnen Kunden zugeordnete Daten.

Bei einem Anbieter, der neue Kunden gewinnen möchte, beispielsweise einer Bank, die Fondsanlagen für Kunden anbietet, steht eine Computereinheit 10. Diese Computereinheit 10 ist mit dem Internet verbunden. Über z.B. drei verschiedene Adressen können drei unterschiedliche Serien von Websites aufgerufen werden. Für jede dieser Serien ist hier schematisch eine Teileinheit 12, 14 bzw. 16 der Computereinheit 10 dargestellt. In einem realen System können diese Einheiten 12, 14, 16 nicht baulich getrennt implementiert sein.

Die Bank hat nun sich z.B. mit drei Partnern im Internet in der weiter unten näher beschriebenen Weise zusammengeschlossen. Die drei Partner stellen, ebenso wie die Bank als Anbieter, über Server (also andere Computereinheiten) 18, 22 bzw. 26 Websites im Internet bereit. Beispielsweise kann der erste Partner eine Fluggesellschaft sein, die eine Website hat, auf der Mitglieder über einen Berechtigungscode ihr "Miles and More"-Konto, d.h. ihren Kontostand bezüglich gutgeschriebener Flugkilometer oder anderer honorierter Leistungen bzw. Käufe, abfragen können. Der zweite Partner könnte beispielsweise ein Automobilclub oder ein anderer Club mit weiter Verbreitung sein, der ebenfalls hinsichtlich seiner Mitglieder im Regelfall eine gewisse Bonität gewährleistet. Ein dritter Partner könnte z.B. ein Verein zur Förderung von Künsten oder dergleichen sein. Durch eine derartige Auswahl der Anbieter bzw. Partner wird statistisch signifikant erreicht, daß nicht beliebige Personen die jeweilige Website der Server 18, 22 und 26 aufrufen, vielmehr findet auf diese Weise eine Vorab-Selektion im Eingangs beschriebenen Sinne statt. Zum Beispiel kann es sich bei dem Partner um ein Unternehmen handeln, das seinen Beschäftigten in den digitalen Gehaltsabrechnungen eine Information über eine unter besonderen Konditionen Fonds oder dergleichen anbietende Bank bietet, wobei die Beschäftigten über eine dabei bereitgestellte Link direkten Zugang zu einer Website der anbietenden Bank erhalten.

Es ist nun auf jedem der Server 18, 22 und 26 ein Link zu einer der genannten drei Adressen vorgesehen. Dies ist in der Figur schematisch durch die Leitungen 20, 24 und 28 dargestellt. Da es sich vorliegend um ein Computernetz wie das Internet handelt, sind diese Leitungen keine tatsächlich materiell vorhandenen Leitungen sondern virtuelle Leitungen. Die jeweiligen Server sind über das Netz alle miteinander verbunden, wie schematisch durch die Leitungen 30 und 32 dargestellt ist, und das Netz ist wiederum über eine reale Leitung mit der Computereinheit 10 verbunden, wobei dann die jeweils aufgerufene Internetadresse zu einer unterschiedlicher Verarbeitung der über das Netz gesandten Daten in der Computereinheit 10 führt. Die Darstellung in der Figur macht deutlich, daß von dem Server 18 über den entsprechenden Link nur die Serie von Website- bzw. Homepageseiten aufgerufen werden kann, die von der Teileinheit 12 verwaltet werden, von dem Server 22 aus nur diejenige Serie von Webseiten aufgerufen werden kann, die von der Teileinheit 14 verwaltet und, daß von dem Server 26 aus nur diejenigen Webseiten aufgerufen werden können, die von Teileinheit 16 verwaltet werden. Die Einbettung der Teileinheiten 12, 14 und 16 in die Computereinheit 10 zeigt, daß es sich nicht um physikalisch sondern virtuell getrennte Einheiten handeln muß. Insbesondere können nach Abruf einer jeweiligen Serie von Websiteseiten anschließend auch Seiten aufgerufen werden, die bei Verwendung jeder der drei Internetadressen gleich sind.

Die Computereinheit 10 ist mit einer zentralen Speichereinheit 34 verbunden. In der Speichereinheit 34 können Daten abgelegt werden, die in den Teileinheiten 12, 14 oder 16 erzeugt wurden. Zudem können auch unabhängig vom Internet Daten eingegeben werden, beispielsweise über eine Computereinheit 36 (diese kann auch durch eine einfache Tastatur mit einem Bildschirm ersetzt werden).

Der Datenaustausch zwischen der hier beispielhaft gewählten Bank und deren potentiellen zukünftigen Kunden läuft wie folgt ab: Ein Nutzer 38 mit einem Bildschirm 40 ruft über das Internet (hier angedeutet durch die Leitung 30) die Website des Servers 22 auf, z.B. die genannte Website der Fluggesellschaft. Ein auf dieser Website geführtes Konto kann nur durch Eingabe eines Kenncodes abgefragt werden, wodurch gewährleistet wird, daß nur der Kunde selbst Zugang zu einer Information über seinen Kontostand hat.

Nach Eingabe des Kenncodes öffnet sich, immer noch angeboten von dem Server 22, eine weitere Seite, die auf dem Bildschirm 40 dargestellt wird, und auf dieser Seite werden Informationen über die betreffende Bank plaziert. Dies kann auf einer Vereinbarung der Bank mit der Fluggesellschaft beruhen, die beispielsweise zur Folge hat, daß die Fluggesellschaft finanziell an der Gewinnung von neuen Kunden über diesen Weg beteiligt wird.

Auf der Homepage oder Website des Partners läßt sich ein Computerlink anklicken, also ein Teil der Oberfläche, bei dessen Anklicken eine andere Adresse als die bisherige Adresse im Internet aufgerufen wird. Dieser Link ist in der Figur schematisch durch die Leitung 24 gekennzeichnet. Die Teileinheit 14 stellt dann Informationen, also eine Serie von Websiteseiten bereit, die auf dem Bildschirm 40 des Nutzers dargestellt werden. Diese Seiten sind zunächst noch im Design der Fluggesellschaft gestaltet, beispielsweise wird deren Logo verwendet, dieselbe Farbe wie bei der durch den Server 22 bereitgestellten Website der Fluggesellschaft etc.. Diesem auf dem Weg über die Website der Fluggesellschaft gekommenen Kunden wird ein ganz spezielles, auf ihn zugeschnittenes Angebot gemacht, das möglicherweise bereits in der Werbung auf der Website der Fluggesellschaft als solches angekündigt war (z.B. "Angebot des Monats für Fluggesellschaft X-Kunden"). Dieses Angebot besteht in der Gewährung besonderer Geschäftsbedingungen, beispielsweise billigerer Kontoführungsgebühren bei Eröffnung eines Aktiendepots bei der Bank, geringere Bankgebühren bei der Eröffnung eines Girokontos etc..

In dieser Serie von speziell für den Fluggesellschaftskunden gestalteten Seiten wird der Kunde aufgefordert, eine individuelle Kennung einzugeben. Dadurch wird er später identifizierbar. Diese Kennung kann der Name des Kunden oder ein Phantasiename sein, wobei der Kunde dann beim späteren Geschäftsverkehr mit der Bank sich als derjenige identifizieren muß, der diesen Phantasienamen gewählt hat, oder es kann bereits in diesem Stadium gefordert sein, daß der Kunde als Kundendaten seinen vollständigen Namen mit der Adresse etc. eingibt.

Entschließt sich der Nutzer 38 dazu, tatsächlich Kunde der Bank zu werden, beispielsweise indem er diese Daten eingibt, oder indem er zusätzlich eine bestimmte Taste ("OK") drückt, so wird in der Computereinheit 10 den eingegebenen Kundendaten eine Kennung hinzugefügt, aus der ersichtlich wird, daß diese Daten zu einem Kunden gehören, der über den Server 22, d.h. über die zweite Adresse (Leitung 24) zu der Computereinheit 10, also der Bank, gelangt ist.

Beispielsweise können die Daten in der Form einer Tabelle abgespeichert sein, in deren einzelnen Spalten der Familienname, der Vorname, die Straße, die Hausnummer und der Wohnort des Kunden mit Postleitzahl eingetragen ist. In einer weiteren Spalte der Tabelle befindet sich dann ein spezifischer Eintrag, beispielsweise der Eintrag "Fluggesellschaftskunde" oder eine entsprechende Abkürzung. Eine derartige Tabelle kann unter anderem auch als Array von Strings abgespeichert werden. Alternativ kann die Kennung darin bestehen, daß dem Kunden eine Codefolge oder eine Kundennummer zugeordnet wird, wobei ein oder mehrere Stellen des Codes bzw. der Nummer angeben, auf welchem Weg der Kunde 38 ursprünglich zum Kunden der Bank geworden ist.

Beispielsweise kann bei einer Kundennummer die führende, also erste Ziffer die Datennetzadresse repräsentieren, über die der Kunde 38 zur Bank gelangt ist. Beginnt etwa die Kundennummer mit einer "1", so ist der Kunde über den Server 18 zur Bank gelangt, beginnt die Zahl mit einer "2", so ist er über den Server 22 zur Bank gelangt, und beginnt sie mit einer "3", ist der Kunde über den Server 26 zur Bank gelangt. Der Code kann auch eine Kundennummer beinhalten, die der Kunde bei dem Partner des Anbieters hat. Beginnt die Zahl mit einer "0", so ist der Kunde überhaupt nicht über das Internet zur Bank gelangt, sondern auf herkömmliche Weise, diese Kundendaten wurden dann über den Computer 36 eingegeben.

Die unterschiedlichen Kennungen der auf unterschiedlichen Wegen zur Bank gelangten Kunden ermöglichen es, datentechnisch einfach unterschiedlichen Kundenkreisen unterschiedliche Konditionen, die für sie maßgeschneidert sind, oder mit denen gerade sie akquiriert werden sollen, zu gewähren.

Dies gilt insbesondere auch dann, wenn der spätere Geschäftsverkehr mit den Kunden auf anderem Wege, z.B. schriftlich oder telefonisch, erfolgt, da sie sich nicht immer wieder neu dadurch auszeichnen müssen, daß sie über das Internet mit der Bank in Kontakt treten, sondern es genügt die Tatsache, daß bankseitig anhand der Kennung klar wird, welche Konditionen für den Kunden gelten.

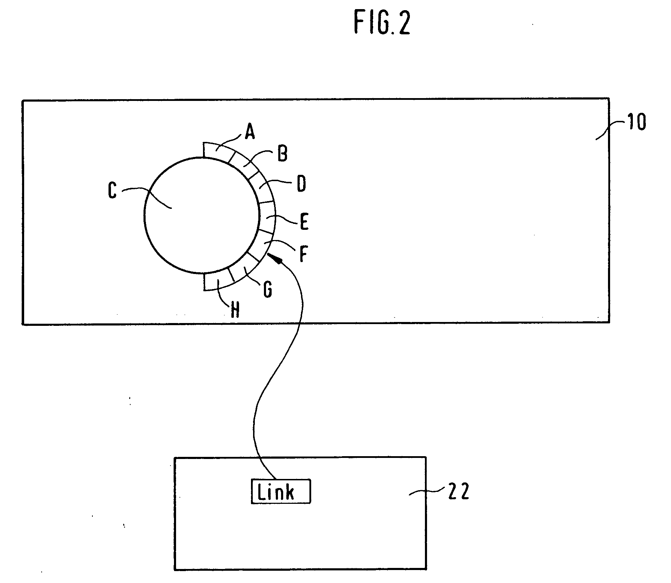

Figur 2 zeigt eine bevorzugte Abwandlung und Ausgestaltung des vorstehend beschriebenen Ausführungsbeispiels der Erfindung. Figur 2 zeigt beispielhaft den Server 10 einer Bank und den Server 22 eines einzelnen Partners der Bank, also z.B. einer Fluggesellschaft. Das versteht sich, daß neben dem Server 22 auch eine Vielzahl weiterer entsprechender Server im obigen Sinne in Figur 2 hinzugedacht werden können. Bei diesem Ausführungsbeispiel stellt der Bank-Server 10 eine sogenannte Coresite C bereit, die man auch im Sinne des Internets als Portal bezeichnen kann. Der Coresites C sind eine Vielzahl einzelner Presites A, B, D, E, F, G, H ... zugeordnet.

Bei diesem Ausführungsbeispiel hat ein potentieller Kunde verschiedene Möglichkeiten, Zugang zur Corsite (dem Portal) der Bank zu erhalten. Zum Beispiel kann der potentielle Kunde über einen Link auf einer Website eines Partners in dessen Server 22, wie in Figur 2 durch den Feil angedeutet, Zugang zu der Presite F erhalten. Die Presite F ist diesem Partner, z.B. der Fluggesellschaft, zugeordnet. Außerdem ist jeder Presite eine URL-Adresse zugeordnet, über die der potentielle Kunde ebenfalls Zugang zu der betreffenden Presite erlangen kann, z.B. indem er die entsprechende URL-Adresse in seinen Webbrowser eingibt. Dadurch, daß bei der bevorzugten Ausgestaltung die Coresite C keine direkte URL-Adresse hat, ist bei dieser Variante gewährleistet, daß der Zugang zur Coresite, auf der die entscheidenden Verkaufsinformationen und Angebote enthalten sind, nur über eine definierte Presite erfolgt.

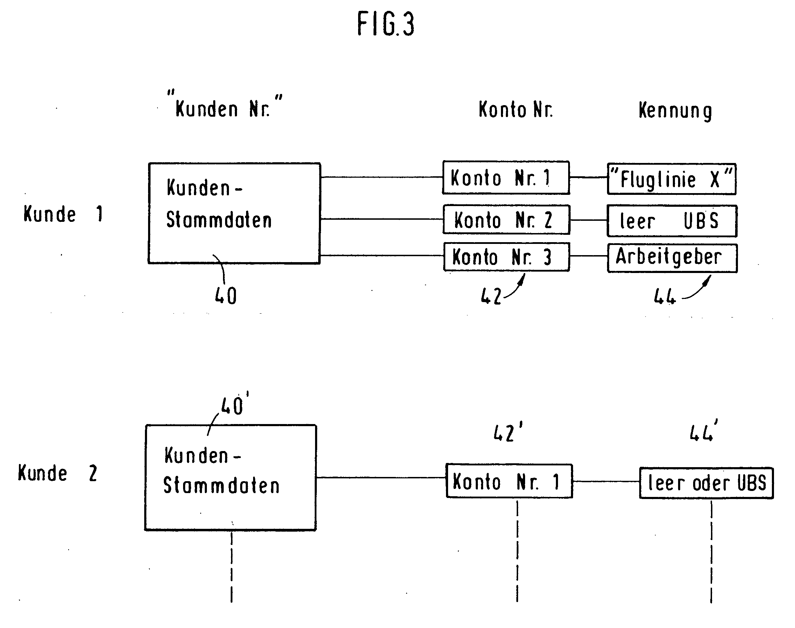

Figur 3 zeigt bevorzugte Datensatzstrukturen für einzelne Kunden. Wie Figur 3 zeigt, besteht bei dieser Variante jeder Datensatz grundsätzlich aus drei Komponenten 40, 42, 44. Die ersten Komponente 40 enthält Kunden-Stammdaten, wie z.B. eine Kundennummer oder auch seinen Namen etc. Eine zweite Komponente 42 enthält Kontonummern und eine dritte Komponente enthält eine spezifische Kennung im obigen Sinne, also eine Kennung, die auf das Partnerunternehmen bezogen ist, sofern der potentielle Kunde über einen Partner gekommen ist. Die dritte Komponente 44 enthält auch eine Kennung darüber, ob der Kunde möglicherweise direkt, also unmittelbar zu dem Anbieter (z.B. der Bank UBS) gekommen ist und auf diese Weise ein hierfür gesondertes Konto (im Beispielsfall das Konto Nr. 2) eröffnet worden ist. Zum Beispiel ist der Kunde Nummer 1 auch über seinen Arbeitgeber (dessen Name gegebenenfalls in der Kennung 44 enthalten ist) gekommen und hat hierfür ein besonderes Konto Nr. 3 erhalten.

Den unterschiedlichen Konten können unterschiedliche Konditionen zugeordnet sein.

Es kann also sein, daß ein Kunde über mehrere Konten verfügt. Für ihn ist gleichwohl nur ein einziger Kundenstammdatensatz 40 angelegt. Entsprechend kann für den Kunden Nr. 2 ein einziger Kunden-Stammdatensatz 40' angelegt sein, eine oder mehrere Konto-Nummern 22' und eine oder mehrere Kennungen 44', je nach der Art und Weise, wie der Kunde Zugang zu der Coresite C gemäß Figur 2 gefunden hat.

Eine andere Möglichkeit, die Datensätze mit einer entsprechenden Kennung eines Partners des Anbieters (z.B. der Bank UBS) zu versehen, besteht darin, daß ein potentieller Kunde über ein Call-Center erstmalig Kontakt mit dem Anbieter (Bank UBS) aufnimmt. Im Rahmen dieser Kommunikation mit dem Call-Center kann der Kunde dann den jeweiligen Partner des Anbieters angeben (z.B. die Fluggesellschaft) und das Call-Center oder auch der Anbieter (UBS) können, gegebenenfalls nach einer erforderlichen Verifikation der Angaben des potentiellen Kunden, die entsprechende Kennung zu den Kundenstammdaten hinzufügen. Schließlich ist es auch möglich, die partnerbezogene Kennung dadurch zu erreichen, daß ein Kunde auf einer Website des Anbieters (UBS) seine "Partnerbeziehung" (z.B. seine Mitgliedschaft in einem Bonusprogramm einer Fluggesellschaft) manuell eingibt.

## Patentansprüche

1. System zur Datenspeicherung und zum Datenaustausch zwischen mindestens einem Anbieter und potentiellen Kunden, mit
- einer Computereinheit (10), die Informationen, insbesondere eine Website, eines Anbieters zum Abruf bereitstellt, welche über eine Datennetzadresse, insbesondere eine Internetadresse, abrufbar sind, und wobei die Computereinheit (10) so ausgelegt und eingerichtet ist, daß ein Nutzer (38) des Datennetzes, der die Informationen abruft, Kundendaten in ein Peripheriegerät eingeben kann, die der Computereinheit (10) über das Datennetz (20, 24, 28, 30, 32) zugeführt werden, wobei zu den Kundendaten in der Computereinheit (10) eine für die Datennetzadresse spezifische Kennung automatisch hinzugefügt wird, und
- zumindest einer Speichereinheit (34), welcher die Computereinheit (10) Kundendaten mit der spezifischen Kennung zuführt, die in der Speichereinheit (34) abgelegt werden, wobei in der Speichereinheit (34) auch Kundendaten abgelegt sind, zu denen diese spezifische Kennung nicht oder eine andere Kennung hinzugefügt ist, so daß anhand der Kundendaten ermittelbar ist, wer ursprünglich nach Aufruf der Datennetzadresse zum potentiellen Kunden geworden ist und welche Kennung ihm zugeordnet ist.

2. System nach Anspruch 1,
wobei die Computereinheit (10) so ausgelegt ist, daß sie Informationen bereitstellt, die über verschiedene Datennetzadressen abrufbar sind, und wobei spezifische Kennungen, die von einem Nutzer (38) des Datennetzes eingegebenen Kundendaten automatisch hinzugefügt werden, bei unterschiedlichen Datennetzadressen, über die der Kunde (38) die Informationen abgerufen hat, verschieden sind, und wobei alle Kundendaten in der zentralen Speichereinheit (34) abgelegt werden, so daß dort anhand der Kundendaten erkennbar ist, wer ursprünglich nach Aufruf welcher Datennetzadresse zum potentiellen Kunden geworden ist.

3. System nach Anspruch 1 oder 2, wobei
die Datennetzadresse eine Internetadresse ist, die über ein Link (20, 24, 28) auf einer Website (18, 22, 26) eines Partners des Anbieters, die außerhalb der Computereinheit (10) verwaltet wird, abrufbar ist.

4. System nach einem der Ansprüche 2 oder 3,
wobei die Computereinheit (10) eine Coresite (C) aufweist, die über einer Mehrzahl von Presites (A, B, D, E, F, G, H) zugänglich ist, insbesondere über eine Link von einer Website eines Servers (22), durch den die Coresite (C) und die Presites (A, B, D, E, F, H) nicht verwaltet werden.

5. Datenstruktur zur Verwendung insbesondere in einem System gemäß einem der Ansprüche 1 bis 4,
**gekennzeichnet durch** zumindest drei Komponenten, eine erste Komponente (40) mit einem Kunden zugeordneten Stammdaten, eine zweite Komponente (42) mit einer oder mehreren dem Kunden zugeordneten Kontonummern, und einer dritten Komponente (44) mit Kennungen, die den einzelnen Kontonummern separat zugeordnet sind und dann, wenn der Kunde über eine vorgegebene Datennetzadresse die Informationen abgerufen hat, eine dieser Datennetzadresse zugeordnete Kennung enthalten.

6. Verfahren zum Führen einer Kundendatei eines Anbieters, mit den Schritten:
- Bereitstellen zumindest einer Datennetzadresse, insbesondere einer Internetadresse, über die ein Nutzer (38) des Datennetzes (20, 24, 28, 30, 32) Informationen des Anbieters, insbesondere ein Website, abrufen kann,
- Bereitstellen der Möglichkeit, daß der Nutzer (38), der die Datennetzadresse aufgerufen hat, wenn er Kunde werden will, Kundendaten eingeben kann,
- automatisches Hinzufügen einer für die Datennetzadresse spezifischen Kennung zu den Kundendaten,
- Ablegen der Kundendaten mit der Kennung in einer zentralen Speichereinheit (34), in der auch Kundendaten anderer Kunden ohne diese spezifische Kennung abgelegt sind, so daß anhand der Kundendaten erkennbar ist, welcher Kunde ursprünglich nach Aufruf der Datennetzadresse zum Kunden geworden ist.

7. Verfahren nach Anspruch 6, wobei mehrere Datennetzadressen bereitgestellt werden, wobei die spezifischen, zu den von einem Nutzer des Datennetzes eingegebenen Kundendaten hinzugefügten Kennungen bei unterschiedlichen Datennetzadressen (20, 24, 28), über die der Kunde (38) die Informationen abgerufen hat, verschieden sind, und wobei alle Kundendaten in der zentralen Speichereinheit (34) abgelegt werden, so daß anhand der Kundendaten erkennbar ist, wer ursprünglich nach Aufruf welcher Datennetzadresse zum potentiellen Kunden geworden ist.

8. Verfahren nach Anspruch 6 oder 7, wobei die Datennetzadresse eine Internetadresse ist, und wobei auf einer Website (18, 22, 26) eines Partners des Anbieters ein Link (20, 24, 28) angeboten wird, über den die Datennetzadresse aufgerufen werden kann.
